# EUROPEAN PATENT SPECIFICATION

(11) **EP 4 147 830 B1**
(45) Date of publication and mention of the grant of the patent: **12.02.2025**
(21) Application number: 21195517.4
(22) Date of filing: 08.09.2021
(51) Int. Cl.: B25J 9/16, B25J 11/00

(54) **DOPPELGANGER TELE-ROBOTIC SYSTEM**
DOPPELGÄNGER-TELEROBOTERSYSTEM
SYSTÈME TÉLÉROBOTIQUE DOUBLE

(43) Date of publication of application: 15.03.2023
(73) Proprietor: Honda Research Institute Europe GmbH, 63073 Offenbach/Main (DE)
(72) Inventor: Goerick, Christian, 63073 Offenbach (DE); Weisswange, Thomas, 63073 Offenbach (DE); Weigel, Martin, 63073 Offenbach (DE); Ruiken, Dirk, 63073 Offenbach (DE); Hassenzahl, 57072 Siegen (DE); Albers, Ruben, 57072 Siegen (DE); Dörrenbächer, Judith, 57072 Siegen (DE)
(74) Representative: Beder, Jens

(56) References cited:
- US-A1- 2014 163 730
- US-A1- 2021 147 148
- US-B1- 8 996 429
- ARGALL B D ET AL: "A survey of robot learning from demonstration", ROBOTICS AND AUTONOMOUS SYSTEMS, ELSEVIER BV, AMSTERDAM, NL, vol. 57, no. 5, 31 May 2009 (2009-05-31), pages 469 - 483, XP026081219, ISSN: 0921-8890, [retrieved on 20081125], DOI: 10.1016/J.ROBOT.2008.10.024
- OKAMOTO T ET AL: "Extraction of person-specific motion style based on a task model and imitation by humanoid robot", 2014 IEEE/RSJ INTERNATIONAL CONFERENCE ON INTELLIGENT ROBOTS AND SYSTEMS, IEEE, 14 September 2014 (2014-09-14), pages 1347 - 1354, XP032676933, DOI: 10.1109/IROS.2014.6942732

## Description

The invention relates to the field of robotics.

The subject matter disclosed relates in particular to autonomous devices (tele-robotic), which have a capability of operating at least partially under control of a remote operator (tele-operating mode) with an autonomous operating capability (autonomous mode). The invention includes a system comprising an autonomous device and an operator interface device for controlling the autonomous device, a method of operating the autonomous device, and a corresponding computer program.

A variety of applications, ranging from remote-controlled handling of hazardous materials or in a hostile environment, to assisting surgeons in performing operations in the medical field, exist for current autonomous devices (robotic devices, robots). A system for tele-operation enables the human operator to perform certain tasks in an environment using a remote-controlled device, which human operator controls from a remote operator location via a communication network by using a remote control device. Regularly, the human operator's input via the remote control allows performing more complex tasks in a remote-controlled or even in semi-autonomous mode of operation than it is possible in a fully autonomous mode of the autonomous device.

There exists a growing demand to provide remote healthcare to patients that have a variety of ailments. Robotic devices offer the possibility to minimize costs by providing desirable home care for such patients. Home care typically requires periodic visits by personal of a healthcare provider. Due to financial or staffing issues, the healthcare provider may not be locally available at a location of a patient, when the patient needs of assistance. Robotic assistance systems may provide valuable support functionality under these circumstances; however, these robotic assistance systems still suffer from limited sensor and actuator capabilities. Additionally, robotic devices usually also lack the social and emotional capabilities that a human could provide.

Furthermore, there exists an increasing number of toy robots for home use.

These examples of robotic devices often have a simple movement platform and include some type of speech synthesis for generating and outputting words and sounds. Robotic devices are usually also regarded as lacking social and emotional affects that could be provided by a human and result from a direct interaction between the robotic device and the user. Existing communication means, for example phone or video chat systems, and telepresence may help in providing some social and emotional output without the need for a physical visit. However, the cited examples for current communications means still require scheduling a time synchronization between two communication counterparts.

One big difference between autonomous and tele-operated robots is that the tele-operator may express his real personality at a remote location via a tele-operated robotic system. The expressed personal traits of the tele-operator's personality may aid in forming social bonds with other persons present in the environment of the tele-operated robotic device. However, the tele-operator will not be available 24 hours a day and 7 days per week.

In the field of driving assistance and autonomous vehicles, approaches exist that combine autonomous actions performed by the assistance system with a limited tele-operation capability. The existing approaches provide a possibility to handle the case the autonomous vehicle encounters a traffic situation that it cannot address based on its own capabilities. Given such case, the system of the autonomous vehicle requests a human tele-operator to take over control of the autonomous vehicle and to maneuver the autonomous vehicle through the difficult traffic situation it cannot handle itself out of its own capabilities, before handing back control to the automated driving system. However, this approach is entirely task-oriented, as it focuses on solving the difficult traffic situation the autonomous vehicle cannot handle. It is of no importance who the actual tele-operator is. Even more, a user of the ego vehicle should not notice the tele-operation taking place in a best-case scenario or at least not note any particular personal treats of the tele-operator addressing the encountered traffic situation.

US 8,996,429 B1 discloses an autonomous robotic device that selects a personality, which will be exhibited by its behavior and look. The robotic device may consistently use the selected personality when interacting with a same person, or by different robotic systems connected to the same system. The selected personality may model an existing human, including the person using the robotic device. The robotic device selects the personality from a database of predefined personalities in order to match a certain context or user attribute, or detected mood of the user. The available personalities and how they are expressed, however, are predefined and do not cover the emotional aspects originating from a direct interaction between specific users and the robotic device.

Further, it is known from Okamoto, T., Shiratori, T., Glisson, M., Yamane, K., Kudoh, S., and Ikeuchi, K.: "Extraction of person-specific motion style based on a task model and imitation by humanoid robot" (IEEE International Conference on Intelligent Robots and Systems (IROS 2014), 1347-1354) to extract specific variations of different human demonstrators all performing the same motion (e.g. throwing something) transfer them to a robotic device to explicitly mimic such a motion style by the robot. This is using observations of human behavior and not teleoperation behaviors and does not extrapolate beyond a single motion.

US 2021/147148 A1 discloses a robot that may operate in one of two modes: an autonomous mode, by executing autonomous control instructions, or a tele-operated mode, in which the control instructions are manually piloted (e.g., directly controlled) by an operator. The document further discloses a method that allows a teleoperator to remotely pilot the manipulator robot and move the robot into a variety of grasping (or manipulation) poses to train the machine learning system to more accurately predict future autonomous robot control instructions.

Thus, there remains an issue to improve current tele-operated robotic devices considering the social interaction aspects and how they can be provided beyond the tele-operation time.

In order to solve the above mentioned problems, the invention provides a system as defined by claim 1, a method as defined by claim 11 and a computer program as defined by claim 12.

The dependent claims define further advantageous embodiments.

A system according to the invention is defined by claim 1.

The system provides means for extracting personality traits of the human operator while controlling the autonomous device in the tele-operating mode in order to maintain the extracted personality traits while the autonomous device acts on his own in the autonomous operating mode. The system bases operation of the autonomous device in the autonomous operating mode on the extracted personality traits. Thus, the system provides a robotic assistance remotely operated by the human operator, but also has autonomous capabilities, which learn some of the operator's characteristic traits in solving a task in the tele-operated mode and adapts the learned traits to exhibit and apply the learned traits also in the autonomous mode. The system may provide basic support and communication capabilities particularly useful for assisting an older or handicapped person in coping with specific tasks.

Using tele-operation in combination with telepresence or video communication means provides a way to support an older person and even to provide further social and emotional values to the aging person. Simultaneously, the system relieves a supporting person from traveling, and even exceeds the current restrictions of the supporting person only available at specific times, which do not need to be synchronized between the two parties, the human operator on the one hand and the assisted person on the other hand.

In the tele-operating mode, the human operator expresses his or her personality, his or her character traits, e.g. gestures, voice, behavior style, specific language via the autonomous device at the remote location, which will provide a feeling of the human operator actually being present at an assisted person's location in the environment of the assisted person. The autonomous device learns the specific operator style of the operator during the tele-operating mode with the autonomous device under control of the operator. The autonomous device incorporates at least some aspects of the operator style into his autonomous behavior in the autonomous mode. This leads to an improved social or emotional support function provided by the autonomous device for the older user, while the human operator person is not available.

The autonomous device, may, for example, determine specific visual features input by the operator via the operator interface device and adapt its own look or visual appearance towards the person based on the determined visual features, and thus generate a familiar impression with the person even when it operates in the autonomous mode.

Preferably, the autonomous device signals to its environment whether it operates in the autonomous mode or in tele-operated mode. The autonomous device may signal this via its behavior, e.g. a specific manner how the autonomous device performs actions. Additionally or alternatively, the autonomous device uses a human-machine-interface for signaling the mode under which it is currently operating, for example by outputting visual or audible signals.

In the tele-operating mode, a remote operator may control the autonomous device in the tele-operating mode, which allows the autonomous device to solve complex tasks, for example, due to superior human perception and decision-making abilities.

According to the invention, the operator style evaluation module is configured to analyze the interaction of the autonomous device with the at least one person while operating in the tele-operating mode by determining actions performed by the autonomous device. Then the operator style evaluation module compares the determined actions with at least one of predetermined default actions, predicted actions, and a database storing typical actions.

By comparing determined actions with predetermined default actions, the personal approach of the operator when addressing the task becomes apparent. The specific operator style associated with the operator when solving the task is determined.

The system operator style imitation module is configured to adapt the autonomous control program based on the operator style data in the autonomous operating mode to adapt at least one of a visual appearance, a visual shape, a speech parameter, an audio output parameter, a movement parameter, a behavior selection preference, a behavior ordering, a touch behavior, and a smell of the autonomous device.

The autonomous device of the system according to one particular embodiment may comprise a speech output module for outputting speech. The operator style evaluation module may be configured to analyze an interaction of the autonomous device with the at least one person while operating in the tele-operating mode by determining a use of specific phrases by the autonomous device, and to generate the operator style aspect data associated with the operator and the at least one person based on the use of the specific phrases. The operator style imitation module can be configured to adapt the autonomous control program based on the operator style aspect data when controlling the interaction with the at least one person in the autonomous operating mode by repeating use of the specific phrases.

The system may comprise a memory configured to store at least one operator style profile, each operator style profile associated with one particular operator. The autonomous device can be configured to select the operator style profile or to switch between different operator style profiles stored in the memory based on at least one of a learned trigger event and a predetermined trigger event or randomly.

The system according to an embodiment includes the autonomous device comprising a local user interface configured to obtain a user input of the person, and the autonomous device is configured to select the operator style profile based on the user input, or to increase or decrease a selection probability value associated with a stored operator style aspect data.

According to an embodiment, the system is configured to detect a reaction of the at least one person to the interaction performed by the autonomous device based on the adapted control program. The system is configured to compare the detected reaction with a predetermined expected reaction, and to extract the operator style aspect based on the comparison, or to apply the operator style aspect based on the comparison.

The system, in particular the operator style evaluation module of an embodiment is configured to perform at least one of: adapting the operator style aspect to a different context than a context under which the operator style evaluation module generated the operator style aspect, generating at least one new action similar to an exemplary action performed by the autonomous device in the tele-operating mode under at least partial control by the autonomous device, determining a generic operator style aspect class based on the operator style aspect data generated by the operator style evaluation module, and adapting the operator style aspect data to at least one capability of the autonomous device.

The system may be configured to adapt the operator style aspect data to capabilities of another autonomous device, and transferring recorded operator style aspect data to the other autonomous device.

**In** an embodiment of the system, the operator interface device comprises an operator input interface configured to receive an operator input by the operator in the tele-operating mode. The received operator input denotes a particular activity performed by the operator as a relevant activity for generating operator style aspect data based on the relevant activity.

The operator interface device of an embodiment is configured to analyze a visual appearance of the operator and voice features of the operator.

Analyzing, in addition to analyzing the style in the robot's behavior, a visual appearance of the operator, e.g. clothing, facial features, and voice features, e.g. tonality of the operator provide operator style aspect data, which enable the autonomous device in the autonomous operating mode to exhibit typical personality traits that easy to recognize for the person. This offers the possibility to analyze the operator's visual and voice features and transform them into similar visual and voice features of the robot and especially offers the remote operator to select specific visual and voice features of the robot to represent its operator style explicitly. The operator style evaluation module analyzes the detected or selected features and uses them to bias the voice and speech features of the robot in autonomous mode.

The following discussion of the system, method, and program uses the attached drawings and provides more detail of the embodiments and examples for application scenarios. On the attached drawings, there shows
Figure 1 a simplified block diagram of the system according to an embodiment including an autonomous device and an operator interface device connected via communication network,
Figure 2 a simplified block diagram of the system according to an embodiment depicting signal flow in the tele-operating mode,
Figure 3 a simplified block diagram of the system according to an embodiment depicting signal flow in the autonomous mode,
Figure 4 a simplified flowchart for illustrating the sequence of method steps of a method according to an embodiment,
Figure 5 a first application example showing a trajectory style transfer illustrating an example for operator style evaluation and imitation according to an embodiment,
Figure 6 a second application example showing a semantic style transfer illustrating an example for operator style evaluation and imitation according to an embodiment,
Figure 7 a third application example showing a communication style transfer illustrating an example for operator style evaluation and imitation according to an embodiment, and
Figure 8 a fourth application example showing an operator style imitation influenced by a local user illustrating an example for operator style evaluation and imitation according to an embodiment.

**In** the figures, same reference signs in different figures denote same or corresponding elements. Wherever considered possible without adversely affecting comprehensibility, the discussion of embodiments avoids a discussion of same reference signs in different figures for sake of conciseness.

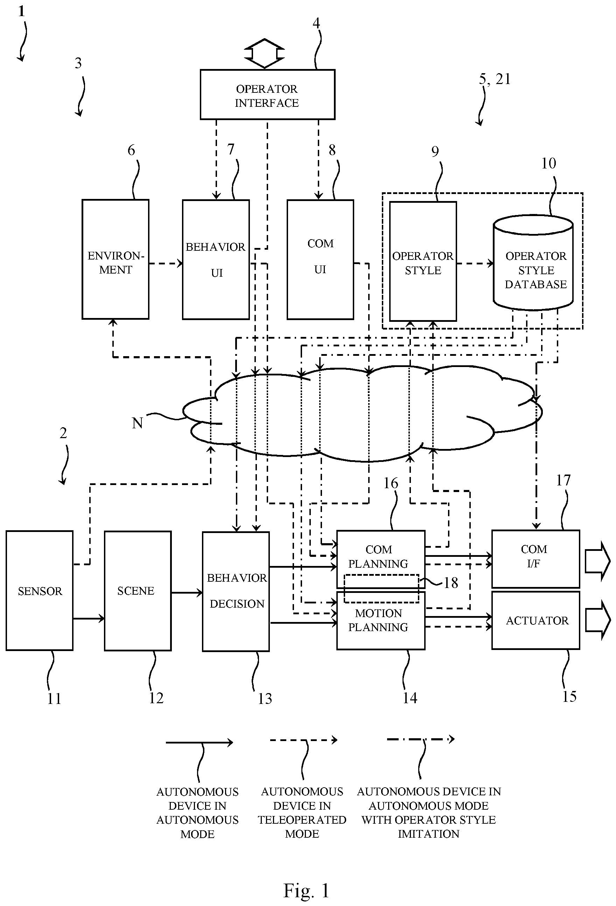

Figure 1 depicts a simplified block diagram of the system 1 according to an embodiment including an autonomous device 2 and an operator interface device 3 connected via a communication network N.

The simplified block diagram shows a signal flow between the individual modules for the different operation modes of the autonomous device 2. Signals depicted with a solid line refer to the autonomous device 2 operating in the autonomous operating mode.

Signals depicted with a dashed line refer to the autonomous device 2 operating in a tele-operating mode.

Signals depicted with a point-dash line refer to the autonomous device 2 operating in the autonomous operating mode with operator style imitation according to an embodiment.

The autonomous device 2 may be a robotic device (robot) designed for autonomously performing a task, e.g. a household related task such as ironing, or a nursing task at a deployment site of the autonomous device 2. The autonomous device 2 comprises at least one actuator 15 for fulfilling the task.

The autonomous device 2 may be one single or even multiple robotic devices. The autonomous device 2 may comprise a robot arm, an electronic toy, a drone, or a passenger vehicle.

The actuator 15 may comprise actuators for moving the autonomous device 2 at the deployment site, e.g. legs, wheels or tracks or a combination thereof.

The actuator 15 may comprise actuators such as at least one arm with a manipulator, in particular for grasping objects when performing the task at the deployment site.

The autonomous device 2 further includes a communication interface 17 for communicating with the environment of the autonomous device 2 and in particular with at least one person P (user) in the environment. The communication interface 17 may include at least one loudspeaker for outputting sound, and in particular voice.

The communication interface 17 may also include at least one display for outputting image data.

Additionally, or alternatively, the autonomous device 2 may include an animated face, which outputs facial expressions to the at least one person P.

Generally, the communication interface 17 outputs information via at least one perceivable channel, in particular at least one of a visual, audible, and tactile channel to the person P.

The autonomous device 2 includes a sensor suite 11, which may comprise at least one sensor, in most cases, an arrangement of a plurality of sensors for sensing the environment of the autonomous device 2 at the deployment site. The sensors provide acquired sensor data on the sensed environment to a scene perception module 12.

Sensors of the sensor suite 11 may include at least one of a camera, an infrared (IR) sensor, an ultrasonic sensor, a LIDAR sensor, a RADAR sensor, a touch-sensitive sensor, e.g. operating on a capacitive principle, a device motion sensor, e.g. a torque sensor, or sensors in a wider sense such as an inter-device communication unit, e.g. a radio, or a Bluetooth ^{RTM} transceiver.

The scene perception module 12 generates an environment representation based on the acquired sensor data, the environment representation describing the scenario in the sensed environment of the autonomous device 2. The generated environment representation is provided to the behavior and decision making module 13 of the autonomous device 2.

The behavior and decision making module 13 uses the environment representation to determine an action and a sequence of actions to be executed by the actuator 15 in order to perform the task. Additionally, and alternatively, the behavior and decision making module 13 determines corresponding information for output by the communication interface 17 in order to perform the task.

The behavior and decision making module 13 may use an autonomous control program running on one or a plurality of processors and associated memory when controlling the interaction with the at least one person P in the autonomous operating mode.

The behavior and decision making module 13 generates and provides a motion planning signal based on the environment representation and the task and provides the motion planning signal to the motion planning module 14. The motion planning module 16 generates an actuator drive signal based on the motion planning signal and outputs the actuator drive signal to the actuator 15, which performs the corresponding action and sequence of actions based on the received actuator drive signal.

The behavior and decision making module 13 generates and provides a communication planning signal based on the environment representation and the task and provides the communication planning signal to a communication planning module 16. The communication planning module 16 generates an communication output signal based on the information communication planning signal and provides the generated communication output signal to the communication interface 17. The communication interface module 17 performs the output of information via one or more communication channels as specified in the communication output signal based on the communication output signal.

The communication interface module 17 may include at least one display of various position at the autonomous device 2 and of different sizes, at least one loudspeaker, at least one LED or similar light output device, an image projector, indirect output means such as the technical capability to send text and/or image messages via, for example services such as email, SMS or a video signal to other devices , for example to a TV set, a PC, or a mobile phone.

The communication interface module 17 may further comprise means for communicating a current state (operating mode) of the autonomous device 2, in particular whether the autonomous device 2 is in the autonomous operating mode or in the tele-operating mode.

Communicating the current operating mode may be implemented by the display of the communication interface module 17 by displaying an artificial face image (autonomous operating mode), or alternatively a video stream depicting the operator OP (tele-operating mode).

Alternatively or additionally, a color/activity change in a LED device on the autonomous device 2, a mechanical member of the autonomous device is active or changes position.

Alternatively or additionally, an additional arm of the autonomous device 2 is only moving when the autonomous device 2 operates in the tele-operating mode

Alternatively or additionally, a head of the autonomous device 2 rotates in order to show an output device or a different design,

Alternatively or additionally, small parts of the autonomous device 2, e.g. simulating robot "hair", are exposed or retracted.

The autonomous device 2 further comprises an operator style imitation module 18 configured to adapt the autonomous control program based on the operator style aspect data generated by an operator style evaluation module 5 when controlling an interaction with the person P in the autonomous operating mode with operator style imitation.

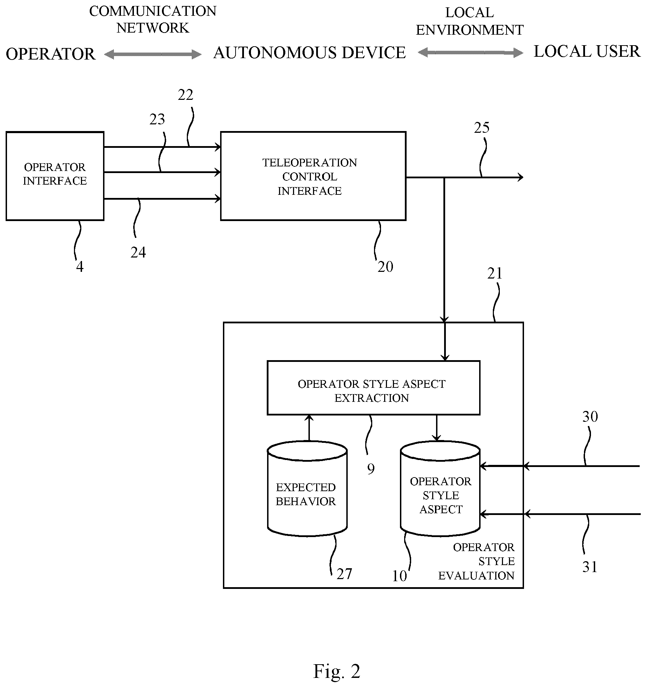

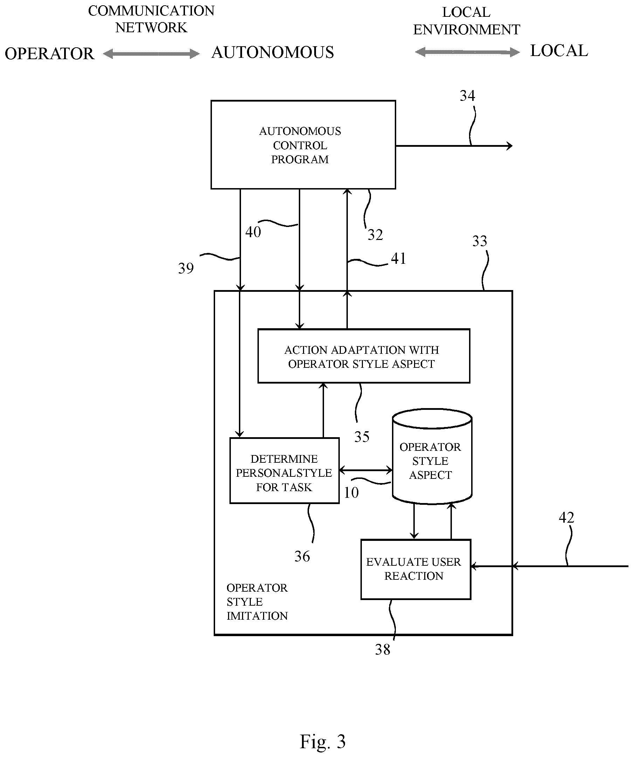

Functionality and processing of the operator style evaluation module 5 and the operator style imitation module 18 will be discussed with respect to figures 2 and 3 in more detail below.

The scene perception module 12, the behavior and decision making module 13, the motion planning module 14, the communication planning module 16 and the operator style imitation module 18 may be implemented as modules (program module) of a robot control program in software which runs on one or an arrangement of a plurality processors with corresponding peripheral hardware, such as memory and communication bus devices. The discussed distribution on different modules is to be understood as a functional distribution.

The robot control program uses the acquired sensor data to generate the representation of the environment of the autonomous device 2 and to determine a task to be performed by the autonomous device 2.

Alternatively or additionally, the person P present in the environment of the autonomous device 2 may define (command) the task to the autonomous device 2.

Alternatively or additionally, the operator OP may command the task for the autonomous device 2 to the robot control software via the communication network N.

The robot control software will use the generated representation and the task in a behavior selection component represented by the behavior and decision module 13, the motion planning module 14, and the communication planning module 16 to determine appropriate actions to address the given task in the perceived current scene (situation). The behavior selection component selects a behavior in order to proceed with addressing the given task, transforms the selected behavior in the motion planning module 14, and the communication planning module 16 into suitable motions and communication outputs of the autonomous device 2. The motions and communication outputs are subsequently sent to actuator 15 and the communication interface 17 of the autonomous device 2.

The robot control program may thus enable the autonomous device to a perform autonomously specific tasks, for example filling a dishwasher, performing vacuum cleaning, or responding to questions to support the person P locally in the person's environment.

The autonomous device 2 may address tasks including, for example, cleaning tasks such as dusting, vacuuming, window cleaning, fetching or serving tasks, carrying tasks, e.g. transporting groceries. Additionally or alternatively, the autonomous device 2 may perform tasks such as filling or clearing a dishwasher, cooking support including, for example, mixing, peeling, and weighing. The tasks may further include playing games, Q&A conversations, display of videos or pictures, outputting reminders, watering plants, supporting local user movement by providing physical support for walking, or getting up. The tasks may include supporting the person P in its daily activities, for example brushing teeth, combing, getting dressed, applying make-up, washing, providing feeding support, or similar household or personal supportive activities.

The operator style imitation module 18 receives the operator style aspect data from an operator style database 10 via the communication network N. The communication network N provides a communication link between the autonomous device 2 and the operator interface device 3. The communication network N may provide communication based on an internet protocol but is not limited to an internet protocol based communication.

The communication network N provides a communication link between the autonomous device 2 and the operator interface device 3 for transferring data from the operator style evaluation module 5 to the operator style imitation module 18 in or for the autonomous operating mode with operator style imitation, as discussed above, but also in the tele-operating mode.

It is to be noted that the arrangement depicted in fig. 1, arranging the operator style evaluation module 5 locally together with the operator interface device 3 and the operator style imitation module 18 locally at the autonomous device 2, is one possible arrangement. Alternate arrangements are also possible.

In the tele-operating mode, an operator OP may tele-operate the autonomous device 2 from a remote location using the operator interface device 3.

The operator interface device 3 may be implemented using an operator interface software running on a hardware, for example a computing device including at least one processor, and respective peripheral components, e.g. memory, bus devices, input/output devices, and interfaces.

In the tele-operating mode, the operator interface device 3, in particular an environment perception module 6 of the operator interface device 3, receives via the communication network N signals including the sensor data from the sensor suit 11 of the autonomous device 2.

The operator interface device 3 includes a behavior decision module 7, which obtains an environment representation generated by the environment perception module 6.

The operating interface device 3 includes an operator interface module 4 that may render a representation of the environment of the autonomous device 2 based on the sensor data received by the environment perception module 6 by forwarding processed sensor data, e.g. a camera image and sound data acquired by a microphone of the sensor suite 11 of the autonomous device 2. Alternatively or additionally, the operator interface module 4 of the operator interface device 3 may provide an abstracted view of the sensed scene in the environment of the autonomous device 2 generated based on the obtained sensor data to the operator OP. The abstracted view may, for example include a rendering of objects detected by the sensor suit 11 into a virtual environment provided by the operator interface module 4 to the operator OP.

The virtual environment presented by the operator interface module 4 to the operator OP may include, for example, at least one of a camera stream or multiple parallel camera streams acquired by the sensor suite 11, a camera stream with annotation of relevant objects and potential interaction opportunities, a virtual environment in a first person view, in a birds-eye-view, or similar perspectives.

The virtual environment may recreate important aspects of environment of the autonomous device 3. Additionally or alternatively, the virtual environment may include symbols communicating a state of the autonomous device 2 or of objects in the environment, video streams from environment cameras, e.g. CCTV cameras not forming part of the autonomous device 2.

The operator interface module 4 may include a display or monitor device to output image data, possibly along with audio data, to the operator OP. The display may include at least one of a computer display, a mobile phone display, a tablet computer display, a TV display, virtual reality (VR) glasses, and a conventional control panel type display having, for example, an arrangement of a plurality of LEDs communicating system states.

The operator interface device 3 transmits control signals for controlling the autonomous device 2 in the tele-operating mode to the behavior and decision making module 13, the motion planning module 14 and the communication planning module 16 of the autonomous device 2 via the communication network N.

The operator interface device 3, in particular the operator interface module 4, may further receive an input from the operator OP using an input means. The input means may include, for example, at least one of a joystick, a keyboard, a microphone, a mouse device, a trackball device, a gesture sensor, a touchpad, and a wearable motion tracker, for example hands/eye/body motion sensors. The operator interface device 3 may map the received input from the operator OP to a specific behavior (target behavior) of the autonomous device 2. The input may potentially render additional features, e.g., key bindings, selectable path markers of the autonomous device 2, which are suitable for explaining and supporting of the mapping between the input provided by the operator OP and the behavior of the autonomous device to the person P.

The operator interface device 3 may additionally provide means to forward or trigger communicative actions to the autonomous device 3. For example, the operator interface device 3 may forward an image stream provided by a camera or an audio stream provided by a microphone stream via the communication planning module 16 of the autonomous device 2 to a display or an audio output of the communication interface of the autonomous device 2.

The operator OP may select an emoji using the operator interface 4 of the operator interface device 3 that the communication planning module 16 may transform into a corresponding facial expression for outputting via the communication interface 17 of the autonomous device 2.

Examples of control inputs for the operator OP via the operator interface module 4 may include at least one of rendering of path options for device/interaction locations in the environment, task options onto the environment representation for selecting and then autonomously performing the selected task option, selection of certain joints of arms, manipulators or legs of the autonomous device 2 and their desired target positions, and an option instructing the autonomous device 2 to follow the operator's OP motion, e.g. an arm motion, communication of arm/body motion direction and a velocity.

Examples of inputs (control inputs) for the operator OP via the operator interface module 4 may also include at least one of, based on a joystick position, selecting a number of trajectory intermediate points, which are then connected by motions of the autonomous device 2, and/or parts of the autonomous device 2, for example an arm of the autonomous device 2, selecting a body part of the autonomous device 2 that is used to perform a certain motion controlled by the input device of the operator interface module 4, selecting subtasks to be performed by the autonomous device 2 in a specific order from options displayed on an output device of the operator interface module 4.

Using the input device(s) of the operator input device 4, the operator OP may select one or a combination out of a plurality options for output via the communication interface module 17 of the autonomous device 2:
For example, the operator OP may select video communication output by the communication interface module 17, e.g. a remote camera stream provided by the operator interface device 3, or voice communication from a microphone of the operator interface module 3 to a loudspeaker of the communication interface module 17, or selection of prototypical facial expression to be performed by the communication interface module 17. The options for selection by the operator OP may further include a direct mapping of a recorded facial expressions/gestures/eye movements of the operator OP to corresponding output means of the communication interface module 17,

Inputs obtained by the operator interface module 4 are transmitted as control signals via the communication network N to the autonomous device 2. The autonomous device uses the received control signals from the operator interface device 3 to control the behavior of the autonomous device 2, in particular by controlling the motion planning of the motion planning module 14 and the communication planning by the communication planning module 16.

The autonomous device 2 shown in figure 1 operates autonomously in the autonomous operating mode, for example while the operator interface device 3 is not active or not connected. In case the operator interface device 3 is connected, a connection between the operator interface device 3 and the autonomous device 2 is established, the operator OP can, e.g. fully or partially, control the behavior and communication of the autonomous device 2.

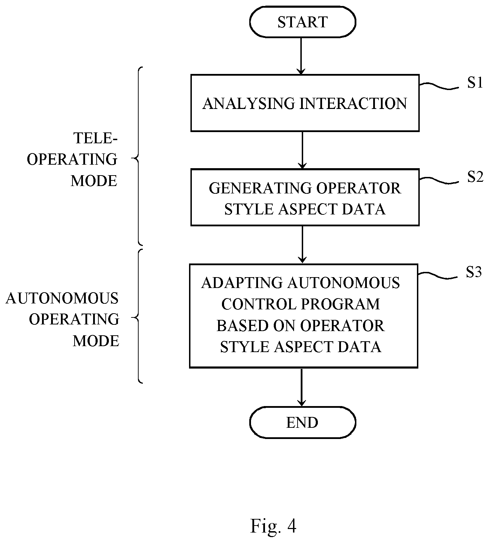

Figure 2 depicts a simplified block diagram of the system 1 according to an embodiment depicting a signal flow in the tele-operating mode. Figure 4 focuses on aspects of the operator style evaluation module 21 in the tele-operating mode.

While operator is in control of the autonomous device in the tele-operating mode, her or his cognitive abilities enable the autonomous device to perform a more complex task to support person compared to the autonomous device in the autonomous operating mode. For example, communication and behavior interfaces allow the operator an increased level of social personal interaction compared to the autonomous device in the autonomous operating mode. The operator may convey some of his personality through specific behavioral and communicative styles, e.g. a walking style, a talking style, a specific gesturing, or a particular greeting phrase.

The operator style evaluation module 21 of figure 2 is shown as part of the autonomous device control program of the autonomous device 2 and therefore represents a structurally different embodiment than the embodiment of figure 1.

The operator OP inputs movement commands 22 instructing movements of the autonomous device 2, task annotations 23, which provide information on the task to be performed, and speech data 24 via the input device 4 of the operator interface device 3. The operator interface device transmits the received movement commands 22, task annotations 23, and speech data 24 via the communication network N to the autonomous device 2. A tele-operation control interface 20 of the tele-operation control program of the autonomous device 2 in the tele-operating mode processes the received movement commands 22, task annotations 23, and speech data 24 and generates actuator drive signals and communication output signals to the actuator 15 and the communication interface module 17 of the autonomous device 2 respectively. The tele-operation control interface 20 thus controls the interaction 25 of the autonomous device 2 in the tele-operating mode with the environment and at least one person P in the environment. The interaction 25 of the autonomous device 2 in the tele-operating mode with the environment and at least one person P in the environment bases on actions performed by the actuator 15 and signals output by the communication interface module 17.

The autonomous device 2 shares the same environment with the at least one person P (local user).

The interaction 25, in particular the actions performed by the actuator 15 and the output of the communication interface module 17 are input as executed actions in the tele-operating mode under control by the operator OP for the operator style evaluation module 21.

The operator style evaluation module 21 uses the input for operator style aspect extraction 9. The extracted operator style aspects are stored in the operator style database 10.

The operator style evaluation module 21 is configured to analyze the interaction of the autonomous device 2 with the at least one person P while operating in the tele-operating mode by determining actions performed by the autonomous device 2 and by comparing the determined actions with at least one of predetermined default actions, predicted actions, and a database storing typical actions. The operator style evaluation module 21 may comprise a database 27 storing at least one of the predetermined default actions, the predicted actions, and the typical actions used in the operator style aspect extraction 9.

The operator style evaluation module 21 stores the extracted operator style aspects in the operator style aspect database 10 associated with a corresponding scene context and task data 30.

Extracting the operator style aspects (operator interaction style aspects) includes comparing actions (activities) that the autonomous device 2 performs in a particular situation triggered by the operator OP with the activities that the autonomous device 2 would have performed in the autonomous operating mode in the same situation. For example, for a given type of behavior such as walking from location A to location B, or answering a question, the operator style evaluation module 21 compares the exact manner for performing a certain action, the exact sequential ordering of actions, the timing and/or context of the performed actions with a general manner for performing, the general sequential order, the general timing, the general context the same action would be performed by the autonomous device 2 when operating in the autonomous operating mode.

Additionally or alternatively, the exact manner for performing a performed action, the exact sequential ordering of actions, the timing and/or context of the performed action are compared to a standard behavior from the database 27. The standard behavior may be described on a certain level of abstraction. The differences determined by the comparison, e.g. a determined deviation from an standard motion trajectory, additional words/utterances besides the exact answer, will be stored in the operator style database 10.

Additionally or alternatively, the operator style evaluation module 21 performs the comparison based on a compressed or a latent representation of the default behaviors, which was learned by a machine learning algorithm in a pre-deployment training phase with a variety of behavior variations.

The machine learning algorithm may be, e.g. an auto-encoder network or using Bayesian inference methods.

The operator OP may use the operator interface 4 including input means to inform the system that a particular currently performed action, a recently performed action, or a future action (or sequence of actions) is to be regarded be as an operator style aspect representative of the particular operator OP and his personal operator style or behavior. The operator style evaluation module 21 may store differences from these representative actions or explicit copies of such representative actions in the operator style database 10.

Additionally or alternatively, the person P as a local user also has input means at his disposal for informing the system 1 that particular currently performed action, a recently performed action, or a future action (or sequence of actions) of the autonomous device 2 in tele-operating mode conveyed particularly well an aspect of the operator style of the operator OP. The operator style evaluation module 21 may store differences from those actions or explicit copies of such action performance in the operator style database 10.

Additionally or alternatively, the operator style evaluation module 21 analyses the reaction of the person P in response to a certain currently performed action, a recently performed action, or a future action (or sequence of actions) of the autonomous device 2 in tele-operating mode. If the operator style evaluation module 21 detects a social or emotional reaction, e.g. a smiling, a heartrate increase, of the person P, the operator style evaluation module 21 may interpret this as an indicator that the recently performed action or sequence of actions included a valuable aspect of operator style. The operator style evaluation module 21 may store differences from those actions or explicit copies of such action performance in the operator style database 10.

Additionally or alternatively, the operator style evaluation module 21 might store a type of a reaction from the person P with the respective style and might use this to evaluate and/or improve the expression of style in the autonomous operating mode. This may result in same or similar responses from the person P when performed by the autonomous device in the autonomous operating mode. A specific implementation may use methods known from reinforcement learning, for example, increasing a selection probability of operator style aspects stored in the operator style database 10 that cause certain local user responses.

The operator style operation module 21 may obtain information on a detected reaction of the at least one person P to the interaction 25 performed by the autonomous device 2 as expected behavior.

The operator style operation module 21 compares the detected reaction of the at least one person P with predetermined expected reactions, and extract operator style aspects based on the comparison. Examples for operator styles the operator style operation module 21 extracts from the operator OP's control of the autonomous device in the tele-operating mode can include:
- certain optional behaviors, for example holding a door open, performing social touch, pushing objects while on the way towards their location, collecting trash while doing something else, are performed by the operator OP,
- order of actions for solving a task,
- performing motion trajectories in a certain way, e.g. smooth, jerky, fast, slow, exaggerated motions, moving around a table always on left side, always using left, not right, arm for certain tasks, certain non-task-directed behaviors, e.g. moving arms while walking, touching objects while passing them, ...
- examples for communication styles that the operator style operation module 21 is extracting from the operator OP's operation, the autonomous device 2 may incorporate them into its own communication behavior in autonomous mode afterwards) could be:
- specific greeting/goodbye phrases,
- frequently used gestures, facial expressions, wordings, specific ways of physical interaction with the person P, e.g. hugging, where to touch the person P, communicative behavior while performing a specific task, e.g. whistling, humming, "biting tongue", specific stories/jokes that are told repeatedly, distance to local users at which the remote operator is positioning the robot when communicating

Examples for personality related features that the operator style operation module 21 extracts from the operation of the autonomous device by the operator OP and how they could be used by the autonomous device 2 in the autonomous operating mode could be:
- An operator that tells jokes often. The robot will also tell jokes in autonomous mode.
- Characteristics of remote operator's voice/speech usage (pitch, tone, tempo) will be used to adapt the robot's voice.
- Characteristics of remote operator's communicated look will be used to adapt what the robot is showing on its display when in autonomous mode.
- If the remote operator likes to talk about certain things, the robot might also provide more news/stories e.g. from internet about this topic in autonomous mode.
- An operator tends to make longer movements than necessary. The robot will adjust its movement in the autonomous mode accordingly.
- An operator uses more risky behaviors to reach certain goals than necessary. The robot will lower the threshold for deciding on a movement or behavior to be executed and thus execute maneuvers that would otherwise be avoided.

In contrast to how the operator OP would convey his personality and style when being physically present in the environment of the person P, the remote operation setup results in a particular behavior exhibited by the autonomous device 2 in the tele-operating mode resulting from control inputs provided by the operator at the operator interface device 3, The control inputs also convey the operator's personal style. The operator interface device 3 provides the operator OP many options to influence the behavior of the autonomous device 2.

The operator style evaluation module 21 may perform the operator style analysis over an extended time of the operator OP controlling the autonomous device 2 in the tele-operating mode. Thus, an extracted information on the operator style aspects might get more detailed and/or more extensive as time progresses.

Additionally or alternatively, the operator style evaluation module 21 may apply a machine learning method trained to predict changes to a default behavior that are observed in the operator style during operation in the tele-operating mode. The machine learning method performs supervised learning comparing predicted changes to actually observed changes for given actions controlled by the operator OP.

Additionally or alternatively, the operator style evaluation module 21 uses a machine learning method to learn a model of the operator style aspects based on the collected operator style aspects in the operator style database 10 after a certain time elapsed. The generated model can then be applied to any autonomous behavior and adapt the autonomous behavior in the autonomous operating mode to the learned operator style.

Additionally or alternatively, the operator style evaluation module 21 uses a machine learning method for classifying operator style aspects as to belonging to one of a number of predefined personality classes. The predefined personality classes are, e.g., collections of certain adaptation-context-probability triplets defined in advance by experts. A most frequently assigned class for operator style aspects can then be used to sample new adaptations based on the triplets of the given class, which are applied to any autonomous behavior.

Figure 3 shows a simplified block diagram of the system 1 according to an embodiment depicting a signal flow in the autonomous operating mode.

In the autonomous operating mode, the autonomous device 2 operates autonomously without control input from the operator interface device 3 and thus independent from the operator OP.

An operator style imitation module 33 adapts the autonomous control program 32 of the autonomous device 2 based on the operator style data generated by the operator style evaluation module 21 and stored in the operator style database 10 when controlling the interaction with the at least one person P.

The adapted autonomous control program 32 results in a personalized interaction 34 of the autonomous device 2 in the autonomous operating mode with the environment and persons P present in the environment.

The autonomous control program 32 provides information on the active task 39 and information on the planned action 40 to the operator style imitation module 33.

The operator style imitation module 33 determines a personalized operator style for the active task using the information on the active task received from the autonomous control program 32 and the operation style aspect data stored in the operator style database 10. The personalized style for the active task is then used to adapt the planned action provided by the autonomous control program 32 to generate the personalized action 41.

The operator style imitation module 33 provides the personalized action 41 to the autonomous control program 32. Thus, the adapted autonomous control program 32 is enabled to perform the personalized interaction 34 of the autonomous device 2 in the autonomous operating mode with the environment and persons P present in the environment.

Additionally, the operator style imitation module 33 may receive user reaction 42 to the personalized interaction 34 of the autonomous device 2 in the autonomous operating mode with the environment and persons P present in the environment from at least one person P. The operator style imitation module 33 may perform an evaluation 38 of the received user reaction 42 to the personalized interaction 34.

The evaluation 38 may include obtaining an expected reaction to the personalized interaction 34 by the person P from the operator style database 10, comparing the expected reaction with the received user reaction 42 to the personalized interaction 34, and to update the operator style database 10 based on the determined difference between the expected reaction and the received user reaction 42.

Updating the operator style database 10 may include removing operator aspect data, or amending, e.g. increasing or decreasing probability values of the operator aspect data concerned by the expected reaction 42, for example.

The operator style imitation module 33 may apply differences and adaptations from the operator style database 10 on the planned actions to any or multiple of the components of the autonomous control program 32, e, g, the behavior and decision making module 13, the motion planning module 14, and the communication planning module 16 of the autonomous device 2.

The adaptations to the autonomous control program 32 and the planned actions result in mimicking certain behaviors, personal traits, motion styles and communication styles of the operator OP, and/or to transfer certain personality style features of the operator OP to the autonomous control program of the autonomous device in the autonomous operating mode.

For example, the autonomous device 2 in the autonomous operating mode performs a specific required action, which the autonomous device 2 performs exactly as the operator OP previously did in the tele-operating mode or which is triggered by a same event. This may include replaying the specific required action from the operator style database 10.

Alternatively/Additionally, this can be an adaptation similar to how the operator OP performed an action, but transferred to a different context, e.g. performing different actions all with a left hand of the autonomous device 2, although the operator OP was so far only recorded performing a specific task with the left hand. This may apply to making a certain gesture when opening a door, while the operator OP so far only performed this gesture for some other doors being opened. This may apply also to applying a stored adaption or difference from the operator style database 10 to another action.

Alternatively/Additionally, this can be an adaptation, which is associated to the same operator style class as the one that previous style aspects of the operator could be related to.

In a specific implementation, content of an operator style database learned from an operator controlling a specific robot platform can be adapted through pre-defined transfer functions to convey similar operator style (aspects) on a different robotic platform with possibly different hard- and software and different capabilities.

A particular operator OP may tell jokes often, thus the autonomous device 2 will also tell jokes in autonomous operating mode.

Characteristic parameters of communicated voice or speech such as pitch, tone, and/or tempo that the operator OP used during teleoperation will be used to adapt a speech output or voice output of the autonomous device 2.

Characteristic elements of the choice of external appearance shown by the robot by the operator OP, are used to adapt what the autonomous device 2 is showing on the display of the communication interface module 17 when operating in the autonomous operating mode.

If the operator OP exhibits an inclination to talk about certain topics, the robot might also provide more news and stories, e.g. acquired via the internet about the particular topic while in the autonomous operating mode.

Figure 4 depicts a simplified flowchart for illustrating the sequence of method steps of a method according to an embodiment.

The method of operating the system 1 with an autonomous device 2 and an operator interface device 3 connected via a communication network N includes three major steps S1, S2 and S3 performed in the tele-operating mode or the autonomous operating mode of the system 1.

In the tele-operating mode, the autonomous device 2 interacts with at least one person in the environment of the autonomous device 2. The tele-operating mode is a mode, in which the autonomous device 2 operates at least partially remotely controlled via the operator interface device 3 by the operator.

In step S1, the method performs a step of analyzing, by an operator style evaluation module, the interaction of the autonomous device 2 with the at least one person while operating in the tele-operating mode under control of the operator.

In step S2, the operator style evaluation module generates operator style aspect data associated with the operator and the at least one person based on the analyzed interaction of the autonomous device 2.

In the autonomous operating mode, the autonomous device 2 interacts with at least one person in the environment of the autonomous device 2 controlled by an autonomous control program. For example, there is no current communication link between the autonomous device 2 and the operating interface device 3 in the autonomous operating mode, or at least there is no requirement for a current communication link over the communication network N.

In the autonomous operating mode, the method performs a step S3 of adapting, by the operator style imitation module, the autonomous control program based on the operator style data generated by the operator style evaluation module in step S2, when controlling the interaction of the autonomous device 2 with the at least one person in the autonomous operating mode.

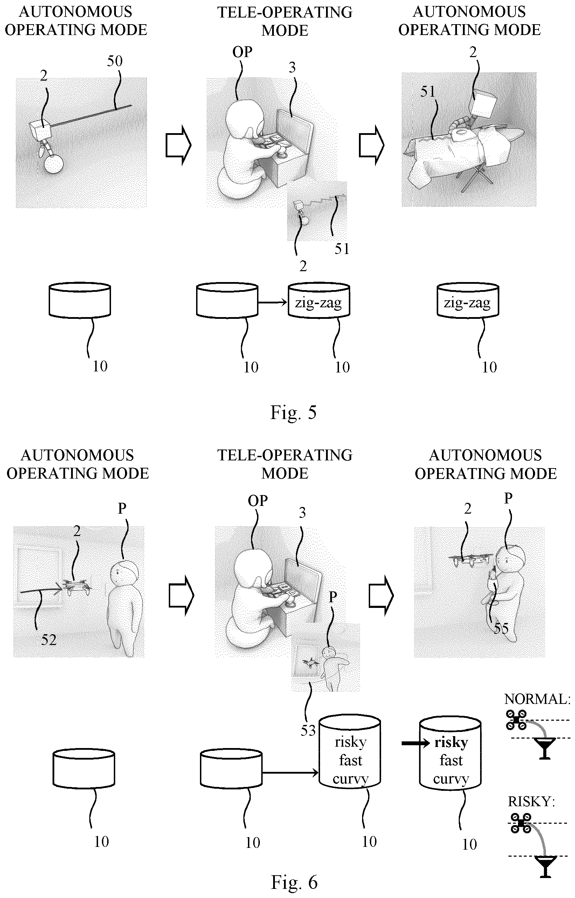

Figure 5 shows a first application example showing a trajectory style transfer illustrating an example for operator style evaluation and imitation according to an embodiment.

The left portion of figure 5 illustrates a base movement (locomotion) performed by the autonomous device 2 operating in the autonomous operating mode. The autonomous device 2 will perform the base movement along a straight movement trajectory 51, which usually represents the most efficient movement between two locations in the environment with regard to time and energy consumption. This default movement pattern will be implemented in the autonomous control program controlling the autonomous device 2 in the autonomous operating mode by default.

The autonomous device 2 in the autonomous operating mode depicted in the left portion of figure 5 has no operator knowledge, the operator style aspect with respect to a movement pattern is void, illustrated in figure 5, left portion, by an empty operator style database 10.

The center portion of figure 5 illustrates the autonomous device 2 operating in the tele-operating mode. The operator OP controls the autonomous device 2 via the operator interface device 3 from a remote location. The operator OP controls a movement of the autonomous device 2 along a zig-zag trajectory 51 as shown in the illustrated insert picture of the center portion of figure 5.

The operator style evaluation module analyses the interaction of the autonomous device 2 while operating in the tele-operating mode under control of the operator OP and determines the operator style aspect of performing a movement along the zig-zag pattern from the zig-zag trajectory 51. The operator style evaluation module generates operator style data including a preference of the operator OP for zig-zag-patterned movement. The generated operator style data including a preference of the operator OP for zig-zag-patterned movement is stored in the operator style database 10. As shown at the bottom of the center portion of figure 5, the operator style database 10 now includes the zig-zag trait determined during the phase the operator OP operates the autonomous device 2 in the autonomous operating mode.

In the right portion of figure 5, the autonomous device 2 is operating in the autonomous operating mode. Contrary to the left portion of figure 5, where the operator style database 10 is empty and therefore the autonomous device 2 moves along the straight movement trajectory 50 according to control of the autonomous control program, the operator style database 10 shown at the bottom of the right portion of figure 5 includes the zig-zag trait as the specific example for the operator style aspect determined during the phase the operator OP operates the autonomous device 2 in the autonomous operating mode. Therefore, the autonomous device 2 determined to perform a movement action in the task at hand using the operator style aspect data including the zig-zag trait.

The autonomous device 2 depicted in the right portion of figure 5 performs the task of ironing a piece of garment. The task of ironing includes an action of moving the iron on the garment in a horizontal plane on the ironing board. The autonomous device 2 performs the task of ironing under control of the autonomous control program.

The default operator style would result in the autonomous device 2 moving the iron along the straight movement trajectory 50 under control of the autonomous control program. Nevertheless, the adapting operator style imitation module adapts the autonomous control program based on the operator style data stored in the operator style database 10. In the right portion of figure 5, the autonomous device 2 performs the task of ironing under control of the adapted autonomous control program, and accordingly moves the iron along the zig-zag patterned movement trajectory 51 under control of the adapted autonomous control program.

Figure 6 depicts a second application example showing a semantic style transfer illustrating an example for operator style evaluation and imitation according to an embodiment.

The embodiment depicted in figure 6, uses a drone depicted as a quadcopter operating in the environment of a person P as a specific example for the autonomous device 2.

The left portion of figure 6 illustrates a base movement in form of a flight path (movement trajectory 52) performed by the autonomous device 2 operating in the autonomous operating mode. The autonomous device 2 will perform the base movement along an almost straight movement trajectory 52 as the most efficient movement between two locations in the environment with regard to time and energy consumption. This default movement pattern is implemented in the autonomous control program controlling the autonomous device 2 in the autonomous operating mode by default.

The autonomous device 2 in the autonomous operating mode depicted in the left portion of figure 6 has no operator knowledge, the operator style aspect with respect to a movement pattern stored in the operator style database 10 is empty, as illustrated in figure 6, left portion.

The empty operator style database 10 may correspond to a case, where no current operator OP for the autonomous device 2 is known.

The center portion of figure 6 illustrates the autonomous device 2 operating in the tele-operating mode. The operator OP controls the autonomous device 2 operating in the environment via the operator interface device 3 from a remote location. The operator OP controls a movement of the autonomous device 2 along an unnecessarily risky movement trajectory 53 deviating from the movement trajectory 52, which the control program would determine as shown in the illustrated insert picture of the center portion of figure 6.

The operator style evaluation module analyses the interaction of the autonomous device 2 with the person P while operating in the tele-operating mode under control of the operator OP, and determines the operator style aspects corresponding to performing a movement along the movement trajectory 53 in comparison to the default movement trajectory 52. The operator style evaluation module generates operator style data including a preference of the operator OP for movement trajectories 53, which correspond to operator style aspects "risky", "fast" and curvy". The generated operator style aspect data including a preference of the operator OP for operator style aspects "risky", "fast" and curvy" is stored in the operator style database 10. As shown at the bottom of the center portion of figure 6, the operator style database 10 now includes the operator style aspects "risky", "fast" and curvy" as personal traits and associated with the operator OP. These operator style aspects determined during the phase the operator OP operates the autonomous device 2 in the autonomous operating mode. In the environment of the person P may be stored further in association with the person P in the operator style database 10. The operator style aspects "risky", "fast" and curvy" represent behavior traits characterizing the behavior of the operator OP, and are thus included in the operator style profile of the operator OP.

In the right portion of figure 6, the autonomous device 2 is operating in the autonomous operating mode. The operator style database 10 shown at the bottom of the right portion of figure 6 includes the operator style aspects "risky", "fast" and curvy" as the specific example for the operator style aspects determined during the phase the operator OP operates the autonomous device 2 in the autonomous operating mode. Therefore, the autonomous device 2 addresses tasks in the environment of the person P taking into regard the operator style aspects "risky", "fast" and "curvy".

The autonomous device 2 depicted in the right portion of figure 6 performs the task of pouring in a beverage into a glass held by the person P.

The default operator style would result in the autonomous device 2 from an optimum position with a first distance between the glass held by the person P and the outlet of tank filled with the beverage arranged on the autonomous device 2 under control of the autonomous control program.

Nevertheless, the operator style imitation module adapts the autonomous control program based on the operator style aspect data stored in the operator style database 10. In the right portion of figure 6, the autonomous device 2 operator style imitation module selects the operator style aspect "risky" from the operator style aspect data base 10. Based on the selected operator style aspect "risky", the operator style imitation module adapts the autonomous control program based on the operator style aspect data and changes the position of the outlet of the beverage tank on the autonomous device 2 with respect to the upper rim of the glass held by the person P, and thereby increases the distance to a second distance and above the optimum first distance determined by the autonomous control program. The adaptation performed by the operator style imitation module 18, 33 results in an increased risk of spilling beverage while pouring the glass of beverage.

The autonomous device 2 imitates the personality trait of preferring risky operation behavior exhibited by the operator OP when operating the autonomous device 2 in the tele-operating mode.

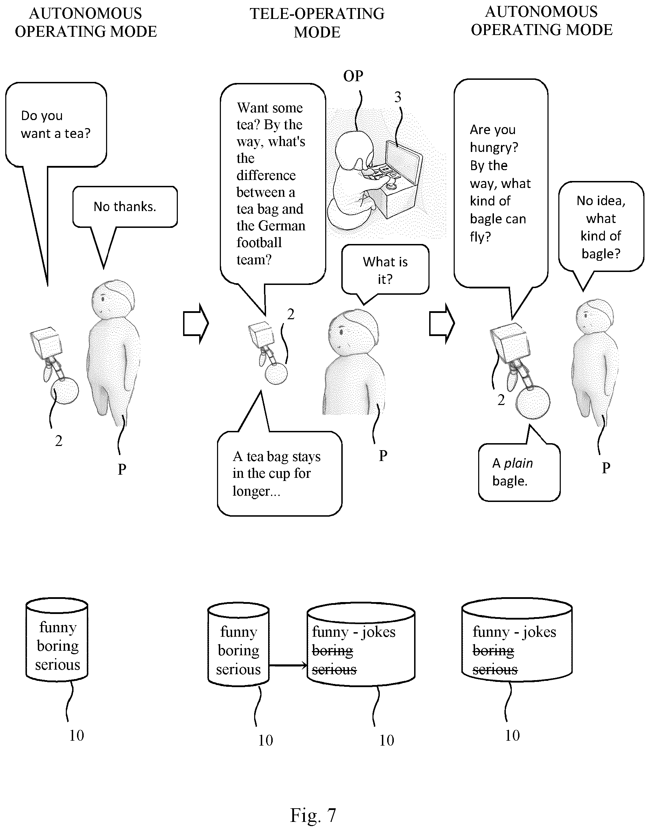

Figure 7 shows a third application example showing a communication style transfer illustrating an example for operator style evaluation and operator style imitation according to an embodiment.

The embodiment depicted in figure 7 refers to an interaction based on a conversation between the autonomous device 2 and the person P. The autonomous device 2 of figure 7 includes a communication interface, which comprises a microphone for picking up sound from the environment and a speech recognition system. The communication interface further includes a speech synthesis system for generating speech data and an acoustic output means, e.g. a loudspeaker.

A left portion of figure 6 illustrates the autonomous device 2 operating in the autonomous operating mode. More particularly, the autonomous device 2 operates in a base autonomous operating mode. The base operating mode may be a mode, in which the autonomous device 2 uses only functional communication. Functional communication refers to a communication, which does not target at human emotion and sentiments. As assumed in the third example shown in the left portion of figure 6, the autonomous device 2 may, for example, use the base autonomous operating mode in case the system 1, and in particular the autonomous device 2 has no data available on a specific personality profile of the operator OP. This corresponds to a case, in which the operator style database 10 comprises no specific operator personality aspect data in an operator personality profile associated with the operator OP.

The left portion of figure 6 illustrates the personality trait database 10 including only generic operator personality trait classes "funny", "boring" and "serious" as illustrative examples generic operator personality trait classes.

The interaction between the person P and the autonomous device 2 includes the autonomous device 2 outputting a spoken sentence offering the person a cup of tea. The person P responds by politely refusing to accept the offer of a cup of tea.

The center portion of figure 7 depicts the autonomous device 2 operating in the tele-operating mode. The operator OP operates the autonomous device using the operator interface device 3. The communication interface of the operator interface device 3 includes input means to input linguistic text data, shown in figure 7 is a keyboard as a specific example of such input means. Alternatively or additionally, the operator may use a microphone and speech recognition software running on a computer for inputting voice and linguistic text data.

The autonomous device 2 of fig. 7 includes a text-to-speech conversion capability to generate speech output data. The speech data is output via the loudspeaker to the person P in the environment the person P shares with the autonomous device.

In the example of figure 7, the operator OP controls the autonomous device, or uses the autonomous device 2 to share a joke in addition to the offered cup of tea. The person P reacts with posing a question in return, and therefore indicates interest in the joke. The operator style evaluation module 5, 21 analyses the communicative interaction of the autonomous device 2 with the person P while operating in the tele-operating mode under control of the operator OP. The operator style evaluation module 5, 21 generates operator style aspect data associated with the operator OP and the person P based on the analyzed communication interaction.

In result to the analysis of the communication of the example in the center portion of figure 7, the operator style aspect data stored in the operator style database 10 is updated. The example of figure 7 updates the operator style aspect data stored in association with the operator OP to include the operator style in the generic operator personality class "funny" in combination with "jokes". The operator style evaluation module 5, 21 may further cancel the generic operator personality classes "boring" and "serious" with respect to the operator OP in the operator style database 10. The updated operator style aspect data stored associated with the operator OP is therefore adapted to the communication interaction between the autonomous device 2 under control of the operator OP. The updated operator style aspect data subsequently reflects therefore learned characteristics of the communication interaction of the autonomous device 2 in tele-operation by the operator OP on the one hand and the person P on the other hand.

In the right portion of figure 7, the autonomous device 2 operates in the autonomous operating mode. Figure 7 shows at the bottom of the right portion of the operator style database 10 with the updated personality trait database 10 including the generic operator personality trait class "funny", in combination with "jokes". The operator style imitation module 18, 33 uses the operator style database 10 with the operator personality styles "funny", in combination with "jokes" for adapting the autonomous control program 32 based on the updated operator style aspect data when controlling the interaction with person P in the autonomous operating mode.

The autonomous device 2 learned in the tele-operating mode and the interaction depicted in the center portion of figure 7, the operator OP is usually funny and likes to make jokes in his interactions. The autonomous device 2 may access a database storing jokes and use jokes in his communication with the person P when operating under control of the autonomous control program in the autonomous operating mode.

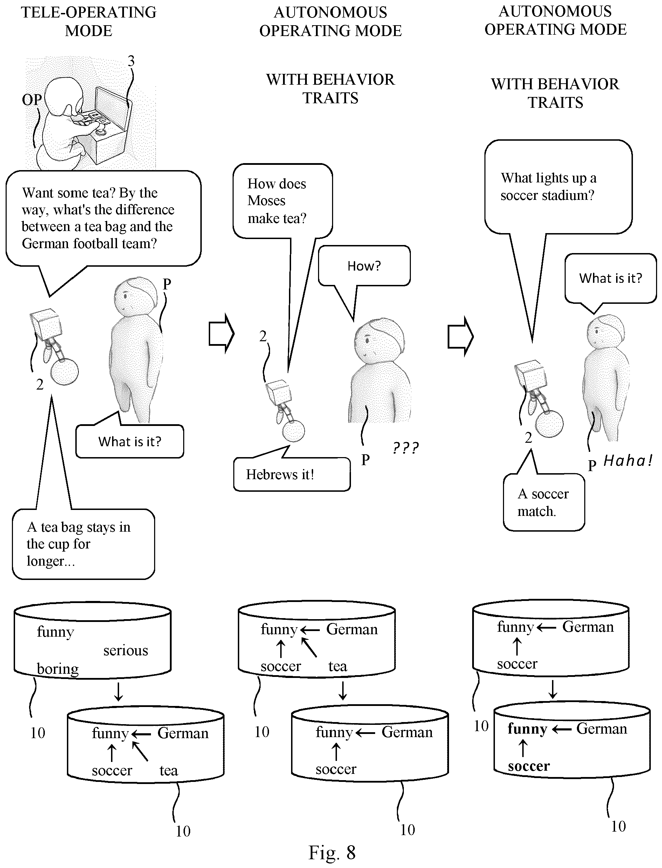

Figure 8 shows a fourth application example showing an operator style imitation influenced by a local user illustrating an example for operator style evaluation and operator style imitation according to an embodiment.

The fourth application example is related to the third application example discussed with reference to figure 7. In particular, the left portion of figure 8 corresponds to the center portion of figure 7, depicting the autonomous device 2 operating in the tele-operating mode. The operator OP operates the autonomous device using the operator interface device 3. The communication interface of the operator interface device 3 includes input means to input linguistic text data, shown in figure 7 is a keyboard as a specific example of such input means.

The autonomous device 2 of fig. 7 includes a text-to-speech conversion capability to generate speech output data. The speech data is outputted via the loudspeaker to the person P in the environment the person P shares with the autonomous device.

In the example of figure 7, the operator OP controls the autonomous device 2, or uses the autonomous device 2 to share a joke related to tea in addition to the offered cup of tea. The person P reacts with posing a question in return, and therefore indicates interest in the joke. The operator style evaluation module 5, 21 analyses the communicative interaction of the autonomous device 2 with the person P while operating in the tele-operating mode under control of the operator OP. The operator style evaluation module 5, 21 generates operator style aspect data associated with the operator OP and the person P based on the analyzed communication interaction.

In result to the analysis of the communication of the example in the left portion of figure 8, the operator style aspect data stored in the operator style database 10 is updated. The example of figure 8 updates the operator style aspect data stored in association with the operator OP to include the operator style in the generic operator personality class "funny" in combination with "German", "tea" and "soccer". The operator style evaluation module 5, 21 may further cancel the generic operator personality classes "boring" and "serious" with respect to the operator OP in the operator style database 10. The updated operator style aspect data stored associated with the operator OP is therefore adapted to the communication interaction between the autonomous device 2 under control of the operator OP.

The updated operator style aspect data subsequently reflects therefore learned characteristics of the communication interaction of the autonomous device 2 in tele-operation by the operator OP on the one hand and the person P on the other hand.

In the center portion of figure 8, the autonomous device 2, operates in the autonomous operating mode under control of the operator style imitation module 18, 33. The operator style imitation module 18, 33 adapts the autonomous control program based on the operator style aspect data generated by the operator style evaluation module 5, 21 when controlling the interaction with the at least one person in the tele-operating mode, and stored in the operator style database 10 in the left portion of figure 8..

In the depicted example, the autonomous device 2 searches for jokes that have a relation to tea in a database. The autonomous device 2 retrieves a joke from the database that fulfils a criterion of being related to tea and initiates a communication with the person P using the retrieved joke.

The autonomous device 2 evaluates a reaction of the person P to the outputted joke. The evaluated reaction of the person P reveals in figure 8 that the person is not amused by the presented joke.

Evaluating the reaction may include evaluating a spoken response or evaluating a facial expression of the person P.

Sensing that the person P is not amused by the course of the interaction initiated by the autonomous device 2, the autonomous device 2 updating the proceeds by updating the operator style database 10 by removing the trait "tea" from the operator style database 10 and modifying the generic trait class "funny", The bottom of the center portion of figure 8 depicts this adaptation of the operator style database 10 by updating the traits "funny" and "tea".

In the right portion of figure 8, the autonomous device 2 operates in the autonomous operating mode under control of the operator style imitation module 18, 33. The operator style imitation module 18, 33 adapts the autonomous control program 32 based on the operator style data generated by the operator style evaluation module 5, 21 when controlling the interaction with the at least one person P in the tele-operating mode, updated when controlling the interaction with the at least one person P in the autonomous operating mode in the center portion of figure 8, and stored in the updated operator style database 10 in the center portion of figure 8.

In the depicted example, the autonomous device 2 searches for jokes that have a relation to soccer in a database. The autonomous device 2 retrieves a joke from the database that fulfils a criterion of being related to soccer and initiates a communication with the person P using the retrieved joke.

The autonomous device 2 evaluates a reaction of the person P to the outputted joke. The evaluated reaction of the person P reveals in figure 8 that the person is amused by the presented joke.

Sensing that the person P is amused by the course of the interaction initiated by the autonomous device 2, the autonomous device 2 proceeds by updating the operator style database 10 by strengthening the trait "soccer" in the operator style database 10 and strengthening the generic trait class "funny". The bottom of the center portion of figure 8 depicts this adaptation of the operator style database 10 by updating the traits "funny" and "soccer".

## Claims

1. System comprising an autonomous device (2) and an operator interface device (3) connected via a communication network (N), wherein
the autonomous device (2) is configured to operate in an autonomous operating mode controlled by an autonomous control program as well as in an at least partially remotely controlled tele-operating mode; and
the operator interface device (3) is configured to enable an operator to at least partially control the autonomous device (2) in the tele-operating mode;
**characterized in that**
the autonomous device (2) is configured to interact with at least one person (P) in the environment of the autonomous device (2); and
the system further comprises
an operator style evaluation module (5, 21) configured to analyze the interaction of the autonomous device (2) with the at least one person (2) while operating in the tele-operating mode under control of the operator (OP) by determining differences between an action performed by the autonomous device (2) in the tele-operating mode and at least one of predetermined default actions, predicted actions and a database (27) storing typical actions, and to generate operator style aspect data associated with the operator (OP) and the at least one person (P) based on the determined differences; and
an operator style imitation module (18, 33) configured to adapt the autonomous control program (32) based on the operator style aspect data generated by the operator style evaluation module (5, 21) when controlling the interaction with the at least one person (P) in the autonomous operating mode.

2. The system according to claim 1, wherein
the operator style imitation module (18, 33) is configured to adapt the autonomous control program (32) in the autonomous operating mode based on the operator style aspect to adapt at least one of a visual appearance, a visual shape, a speech parameter, an audio output parameter, a movement parameter, a behavior selection, a behavior ordering, a touch behavior, and a smell of the autonomous device (2).

3. The system according to one of the preceding claims, wherein
the autonomous device (2) comprises a speech output module (17) for outputting speech,
the operator style evaluation module (5, 21) is configured to analyze an interaction of the autonomous device (2) with the at least one person (P) while operating in the tele-operating mode by determining a use of specific phrases in the outputted speech by the autonomous device (2), and to generate the operator style aspect data associated with the operator (OP) and the at least one person (P) based on the use of the specific phrases, and
the operator style imitation module (18, 33) is configured to adapt the autonomous control program (32) based on the operator style aspect data when controlling the interaction with the at least one person (P) in the autonomous operating mode by repeating the use of the specific phrases.

4. The system according to one of the preceding claims, wherein
the system comprises a memory configured to store a plurality of operator style profiles, wherein each operator style profile is associated with one particular operator (OP) and includes the operator style aspect data associated with the particular operator (OP),
the autonomous device (2) is configured to select the operator style profile or to switch between different operator style profiles stored in the memory based on at least one of a learned trigger event and a predetermined trigger event or randomly, and
the operator style imitation module (18, 33) is configured to adapt the autonomous control program (32) based on the operator style aspect data included in the operator style profile that is selected or switched by the autonomous device (2).

5. The system according to claim 4, wherein
the autonomous device (2) comprises a local user interface configured to obtain a user input from the person (P), and
the autonomous device (2) is configured to select the operator style profile based on the user input, or to increase or decrease a selection probability value associated with a stored operator style aspect data.

6. The system according to one of the preceding claims, wherein
the system is configured to detect a reaction of the at least one person (P) to an interaction performed by the autonomous device (2) based on the autonomous control program (32) that is adapted based on the operator style aspect data, and
the system is configured to compare the detected reaction with a predetermined expected reaction, and is configured to remove the operator style aspect data based on the comparison or is configured to increase or decrease a selection probability value of the operator style aspect data based on the comparison.

7. The system according to one of the preceding claims, wherein
the system is configured to perform at least one of
adapting the operator style aspect to a different context than a context under which the operator style evaluation module (5, 21) generated the operator style aspect data,
generating at least one new action similar to an exemplary action performed by the autonomous device (2) in the tele-operating mode under at least partial control by the autonomous device (2),
determining a generic operator style aspect class based on the operator style aspect data generated by the operator style evaluation module (5, 21), and
adapting the operator style aspect to at least one capability of the autonomous device (2).

8. The system according to one of the preceding claims, wherein
the system is configured to adapt the operator style aspect data to capabilities of another autonomous device (2) based on pre-defined transfer functions, and transferring recorded operator style aspect data to the other autonomous device (2).

9. The system according to at least one of the preceding claims, wherein
the operator interface device (3) comprises an operator input interface (4) configured to receive an operator input by the operator (OP) in the tele-operating mode, and
the received operator input denoting a particular activity performed by the operator (OP) as a relevant activity for generating operator style aspect data based on the relevant activity.

10. The system according to at least one of the preceding claims, wherein
the operator interface device (3) is configured to analyze a visual appearance of the operator (OP) and voice features of the operator (OP).

11. Method of operating a system (1) comprising an autonomous device (2) and an operator interface device (3) connected via a communication network (N), wherein
the autonomous device (2) operates in an autonomous operating mode controlled by an autonomous control program (32) or in an at least partially remotely controlled tele-operating mode, and wherein the operator interface device (3) enables an operator (OP) to at least partially control the autonomous device (2) in the tele-operating mode,
**characterized in that**
the method comprising steps of
analyzing (S1), by an operator style evaluation module (5, 21), an interaction of the autonomous device (2) with at least one person (P) in the environment of the autonomous device (2) while operating in the tele-operating mode under control of the operator (OP) by determining differences between an action performed by the autonomous device (2) in the tele-operating mode and at least one of predetermined default actions, predicted actions, and a database (27) storing typical actions,
generating (S2), by the operator style evaluation module (5, 21), operator style aspect data associated with the operator (OP) and the at least one person (P) based on the determined differences, and
adapting (S3), by an operator style imitation module (18, 33), the autonomous control program (32) based on the operator style aspect data generated by the operator style evaluation module (5, 21) when controlling the interaction with the at least one person (P) in the autonomous operating mode.

12. Computer program with program-code means for executing the steps according to claim 11, when the program is executed on at least one processor or digital signal processor.

## Patentansprüche

1. System mit einer autonomen Vorrichtung (2) und einer Bedienerschnittstellenvorrichtung (3), die über ein Kommunikationsnetz (N) verbunden sind, wobei
die autonome Vorrichtung (2) so ausgebildet ist, dass sie sowohl in einem autonomen durch ein autonomes Steuerprogramm gesteuerten Betriebsmodus als auch in einem zumindest teilweise ferngesteuerten Fernbedienungsmodus arbeitet; und
die Bedienerschnittstellenvorrichtung (3) so ausgebildet ist, dass sie es einem Bediener ermöglicht, die autonome Vorrichtung (2) in dem Fernbedienungsmodus zumindest teilweise zu steuern;
**dadurch gekennzeichnet, dass**
die autonome Vorrichtung (2) ausgebildet ist, um mit zumindest einer Person (P) in der Umgebung der autonomen Vorrichtung (2) zu interagieren; und
das System ferner aufweist:
ein Bedienerstil-Bewertungsmodul (5, 21), das so ausgebildet ist, dass es die Interaktion der unter der Steuerung des Bedieners (OP) in dem Fernbedienungsmodus arbeitenden autonomen Vorrichtung (2) mit der zumindest einen Person (2) analysiert, indem es Unterschiede zwischen einer von der autonomen Vorrichtung (2) in dem Fernbedienungsmodus durchgeführten Aktion und vorbestimmten Standardaktionen und/oder prognostizierten Aktionen und/oder einer typische Aktionen speichernden Datenbank (27) bestimmt und auf Grundlage der bestimmten Unterschiede dem Bediener (OP) und der zumindest einen Person (P) zugeordnete Bedienerstil-Aspektdaten erzeugt; und
ein Bedienerstil-Imitationsmodul (18, 33), das so ausgebildet ist, dass es auf Grundlage der von dem Bedienerstil-Bewertungsmodul (5, 21) erzeugten Bedienerstil-Aspektdaten das autonome Steuerprogramm (32) anpasst, wenn es die Interaktion mit der zumindest einen Person (P) in dem autonomen Betriebsmodus steuert.

2. Das System nach Anspruch 1, wobei
das Bedienerstil-Imitationsmodul (18, 33) so ausgebildet ist, dass es das autonome Steuerprogramm (32) im autonomen Betriebsmodus auf Grundlage des Bedienerstil-Aspekts anpasst, um zumindest eines der folgenden Merkmale anzupassen: ein visuelles Erscheinungsbild, eine visuelle Form, einen Sprachparameter, einen Audioausgabeparameter, einen Bewegungsparameter, eine Verhaltensauswahl, eine Verhaltensanordnung, ein Berührungsverhalten und einen Geruch der autonomen Vorrichtung (2).

3. Das System nach einem der vorherigen Ansprüche, wobei
die autonome Vorrichtung (2) ein Sprachausgabemodul (17) zum Ausgeben von Sprache aufweist,
das Bedienerstil-Bewertungsmodul (5, 21) ausgebildet ist, um eine Interaktion der in dem Fernbedienungsmodus arbeitenden autonomen Vorrichtung (2) mit der zumindest einen Person (P) zu analysieren, indem in der durch die autonome Vorrichtung (2) ausgegebenen Sprache eine Verwendung spezifischer Phrasen bestimmt wird, und um die dem Bediener (OP) und der zumindest einen Person (P) zugeordneten Bedienerstil-Aspektdaten auf Grundlage der Verwendung der spezifischen Phrasen zu erzeugen, und
das Bedienerstil-Imitationsmodul (18, 33) so ausgebildet ist, dass es auf Grundlage der Bedienerstil-Aspektdaten das autonome Steuerprogramm (32) anpasst, wenn es in dem autonomen Betriebsmodus die Interaktion mit der zumindest einen Person (P) durch Wiederholung der Verwendung der spezifischen Phrasen steuert.

4. Das System nach einem der vorherigen Ansprüche, wobei
das System einen Speicher aufweist, der so ausgebildet ist, dass er eine Mehrzahl an Bedienerstil-Profilen speichert, wobei jedes Bedienerstil-Profil einem bestimmten Bediener (OP) entspricht und die dem bestimmten Bediener (OP) entsprechenden Bedienerstil-Aspektdaten enthält,
die autonome Vorrichtung (2) so ausgebildet ist, dass sie, auf Grundlage eines gelernten Auslöseereignisses und/oder eines vorbestimmten Auslöseereignisses oder zufällig, das Bedienerstil-Profil auswählt oder zwischen in dem Speicher gespeicherten verschiedenen Bedienerstil-Profilen umschaltet, und
das Bedienerstil-Imitationsmodul (18, 33) so ausgebildet ist, dass es (32), auf Grundlage der in dem von der autonomen Vorrichtung (2) ausgewählten oder umgeschalteten Bedienerstil-Profil enthaltenen Bedienerstil-Aspektdaten, das autonome Steuerprogramm anpasst.

5. Das System nach Anspruch 4, wobei
die autonome Vorrichtung (2) eine lokale Benutzerschnittstelle aufweist, die so ausgebildet ist, dass sie eine Benutzereingabe von der Person (P) erfasst, und
die autonome Vorrichtung (2) so ausgebildet ist, dass sie das Bedienerstil-Profil auf Grundlage der Benutzereingabe auswählt oder einen den gespeicherten Bedienerstil-Aspektdaten zugeordneten Auswahlwahrscheinlichkeitswert erhöht oder verringert.

6. Das System nach einem der vorherigen Ansprüche, wobei
das System so ausgebildet ist, dass es, auf Grundlage des auf Grundlage der Bedienerstil-Aspektdaten angepassten autonomen Steuerprogramms (32), eine Reaktion der zumindest einen Person (P) auf eine von der autonomen Vorrichtung (2) durchgeführte Interaktion erfasst, und
das System so ausgebildet ist, dass es die erfasste Reaktion mit einer vorbestimmten erwarteten Reaktion vergleicht, und so ausgebildet ist, dass es die Bedienerstil-Aspektdaten auf Grundlage des Vergleichs entfernt, oder so ausgebildet ist, dass es, auf Grundlage des Vergleichs, einen Auswahlwahrscheinlichkeitswert der Bedienerstil-Aspektdaten erhöht oder verringert.

7. Das System nach einem der vorherigen Ansprüche, wobei
das System so ausgebildet ist, dass es zumindest einen der folgenden Schritte ausführt:
Anpassen des Bedienerstil-Aspekts an einen anderen Kontext als einen Kontext, unter dem das Bedienerstil-Bewertungsmodul (5, 21) die Bedienerstil-Aspektdaten generiert hat,
Erzeugen zumindest einer neuen Aktion, die einer von der autonomen Vorrichtung (2) im Fernbedienungsmodus unter zumindest teilweiser Kontrolle durch die autonome Vorrichtung (2) ausgeführten beispielhaften Aktion ähnlich ist,
Bestimmen einer generischen Bedienerstil-Aspektklasse auf Grundlage der von dem Bedienerstil-Bewertungsmodul (5, 21) erzeugten Bedienerstil-Aspektdaten, und
Anpassen des Bedienerstil-Aspekts an zumindest eine Fähigkeit der autonomen Vorrichtung (2).

8. Das System nach einem der vorherigen Ansprüche, wobei
das System so ausgebildet ist, dass es, auf Grundlage vordefinierter Übertragungsfunktionen, die Bedienerstil-Aspektdaten an die Fähigkeiten einer anderen autonomen Vorrichtung (2) anpasst und die aufgezeichneten Bedienerstil-Aspektdaten an die andere autonome Vorrichtung (2) überträgt.

9. Das System nach zumindest einem der vorherigen Ansprüche, wobei
die Bedienerschnittstellenvorrichtung (3) eine Bedienereingabeschnittstelle (4) aufweist, die so ausgebildet ist, dass sie eine Bedienereingabe durch den Bediener (OP) in dem Fernbedienungsmodus erfasst, und
die erfasste Bedienereingabe eine bestimmte, von dem Bediener (OP) ausgeführte Aktivität als eine relevante Aktivität bezeichnet, um auf Grundlage der relevanten Aktivität Bedienerstil-Aspektdaten zu erzeugen.

10. Das System nach zumindest einem der vorherigen Ansprüche, wobei
die Bedienerschnittstellenvorrichtung (3) so ausgebildet ist, dass sie ein visuelles Erscheinungsbild des Bedieners (OP) sowie Sprachmerkmale des Bedieners (OP) analysiert.

11. Verfahren zum Betrieb eines Systems (1) mit einer autonomen Vorrichtung (2) und einer über ein Kommunikationsnetz (N) verbundenen Bedienerschnittstellenvorrichtung (3), wobei
die autonome Vorrichtung (2) in einem durch ein autonomes Steuerprogramm (32) gesteuerten autonomen Betriebsmodus oder in einem zumindest teilweise ferngesteuerten Fernbedienungsmodus arbeitet, und wobei die Bedienerschnittstellenvorrichtung (3) es einem Bediener (OP) ermöglicht, die autonome Vorrichtung (2) im Fernbedienungsmodus zumindest teilweise zu steuern,
**dadurch gekennzeichnet, dass**
das Verfahren die folgenden Schritte aufweist
Analysieren (S1) einer Interaktion der autonomen Vorrichtung (2) mit zumindest einer Person (P) in der Umgebung der autonomen Vorrichtung (2) während des Betriebs im Fernbedienungsmodus unter der Kontrolle des Bedieners (OP) durch ein Bedienerstil-Bewertungsmodul (5, 21), indem Unterschiede zwischen einer von der autonomen Vorrichtung (2) im Fernbedienungsmodus durchgeführten Aktion und vorbestimmten Standardaktionen und/oder prognostizierten Aktionen und/oder einer typische Aktionen speichernden Datenbank (27) bestimmt werden,
Erzeugen (S2), auf Grundlage der ermittelten Unterschiede, durch das Bedienerstil-Bewertungsmodul (5, 21), von dem Bediener (OP) und der zumindest einen Person (P) zugeordneten Bedienerstil-Aspektdaten, und
Anpassen (S3) des autonomen Steuerprogramms (32) durch ein Bedienerstil-Imitationsmodul (18, 33) auf Grundlage der durch das Bedienerstil-Bewertungsmodul (5, 21) erzeugten Bedienerstil-Aspektdaten, wenn die Interaktion mit der zumindest einen Person (P) in dem autonomen Betriebsmodus gesteuert wird.

12. Computerprogramm mit Programmcodemitteln zur Ausführung der Schritte nach Anspruch 11, wenn das Programm auf zumindest einem Prozessor oder digitalen Signalprozessor ausgeführt wird.

## Revendications

1. Système comprenant un dispositif autonome (2) et un dispositif d'interface opérateur (3) connectés via un réseau de communication (N), dans lequel
le dispositif autonome (2) est configuré pour fonctionner dans un mode fonctionnement autonome commandé par un programme de commande autonome, ainsi que dans un mode téléopération au moins partiellement commandé à distance ; et
le dispositif d'interface opérateur (3) est configuré pour permettre à un opérateur de commander au moins partiellement le dispositif autonome (2) dans le mode téléopération ;
**caractérisé en ce que**
le dispositif autonome (2) est configuré pour interagir avec au moins une personne (P) dans l'environnement du dispositif autonome (2) ; et
le système comprend en outre
un module d'évaluation de style d'opérateur (5, 21) configuré pour analyser l'interaction du dispositif autonome (2) avec l'au moins une personne (2) tout en fonctionnant dans le mode téléopération sous le contrôle de l'opérateur (OP) en déterminant des différences entre une action réalisée par le dispositif autonome (2) dans le mode téléopération et au moins un parmi des actions par défaut prédéterminées, des actions prédites et une base de données (27) stockant des actions typiques, et pour générer des données d'aspect de style d'opérateur associées à l'opérateur (OP) et à l'au moins une personne (P) sur la base des différences déterminées ; et
un module d'imitation de style d'opérateur (18, 33) configuré pour adapter le programme de commande autonome (32) sur la base des données d'aspect de style d'opérateur générées par le module d'évaluation de style d'opérateur (5, 21) lors du contrôle de l'interaction avec l'au moins une personne (P) dans le mode fonctionnement autonome.

2. Système selon la revendication 1, dans lequel
le module d'imitation de style d'opérateur (18, 33) est configuré pour adapter le programme de commande autonome (32) dans le mode fonctionnement autonome sur la base de l'aspect de style d'opérateur pour adapter au moins un parmi une apparence visuelle, une forme visuelle, un paramètre de parole, un paramètre de sortie audio, un paramètre de mouvement, une sélection de comportements, un ordre de comportement, un comportement tactile et une odeur du dispositif autonome (2).

3. Système selon l'une des revendications précédentes, dans lequel
le dispositif autonome (2) comprend un module de sortie vocale (17) pour délivrer un message vocal,
le module d'évaluation de style d'opérateur (5, 21) est configuré pour analyser une interaction du dispositif autonome (2) avec l'au moins une personne (P) pendant le fonctionnement dans le mode téléopération en déterminant une utilisation de phrases spécifiques dans le message vocal délivré par le dispositif autonome (2), et pour générer les données d'aspect de style d'opérateur associées à l'opérateur (OP) et à l'au moins une personne (P) sur la base de l'utilisation des phrases spécifiques, et
le module d'imitation de style d'opérateur (18, 33) est configuré pour adapter le programme de commande autonome (32) sur la base des données d'aspect de style d'opérateur lors du contrôle de l'interaction avec l'au moins une personne (P) dans le mode fonctionnement autonome en répétant l'utilisation des phrases spécifiques.

4. Système selon l'une des revendications précédentes, dans lequel
le système comprend une mémoire configurée pour stocker une pluralité de profils de style d'opérateur, dans lequel chaque profil de style d'opérateur est associé à un opérateur (OP) particulier et comporte les données d'aspect de style d'opérateur associées à l'opérateur (OP) particulier,
le dispositif autonome (2) est configuré pour sélectionner le profil de style d'opérateur ou pour changer entre différents profils de style d'opérateur stockés dans la mémoire sur la base d'au moins un parmi un événement déclencheur appris et un événement déclencheur prédéterminé ou de manière aléatoire, et
le module d'imitation de style d'opérateur (18, 33) est configuré pour adapter le programme de commande autonome (32) sur la base des données d'aspect de style d'opérateur incluses dans le profil de style d'opérateur qui est sélectionné ou changé par le dispositif autonome (2).

5. Système selon la revendication 4, dans lequel
le dispositif autonome (2) comprend une interface utilisateur locale configurée pour obtenir une entrée utilisateur provenant de la personne (P), et
le dispositif autonome (2) est configuré pour sélectionner le profil de style d'opérateur sur la base de l'entrée utilisateur, ou pour augmenter ou diminuer une valeur de probabilité de sélection associée à des données d'aspect de style d'opérateur stockées.

6. Système selon l'une des revendications précédentes, dans lequel
le système est configuré pour détecter une réaction de l'au moins une personne (P) à une interaction réalisée par le dispositif autonome (2) sur la base du programme de commande autonome (32) qui est adapté sur la base des données d'aspect de style d'opérateur, et
le système est configuré pour comparer la réaction détectée à une réaction attendue prédéterminée, et est configuré pour supprimer les données d'aspect de style d'opérateur sur la base de la comparaison ou est configuré pour augmenter ou diminuer une valeur de probabilité de sélection des données d'aspect de style d'opérateur sur la base de la comparaison.

7. Système selon l'une des revendications précédentes, dans lequel
le système est configuré pour réaliser au moins une parmi
l'adaptation de l'aspect de style d'opérateur à un contexte différent d'un contexte dans lequel le module d'évaluation de style d'opérateur (5, 21) a généré les données d'aspect de style d'opérateur,
la génération d'au moins une nouvelle action similaire à un exemple d'action réalisée par le dispositif autonome (2) dans le mode téléopération sous le contrôle au moins partiel du dispositif autonome (2),
la détermination d'une classe d'aspect de style d'opérateur générique sur la base des données d'aspect de style d'opérateur générées par le module d'évaluation de style d'opérateur (5, 21), et
l'adaptation de l'aspect de style d'opérateur à au moins une capacité du dispositif autonome (2).

8. Système selon l'une des revendications précédentes, dans lequel
le système est configuré pour adapter les données d'aspect de style d'opérateur aux capacités d'un autre dispositif autonome (2) sur la base de fonctions de transfert prédéfinies, et transférer des données d'aspect de style d'opérateur enregistrées à l'autre dispositif autonome (2).

9. Système selon au moins l'une des revendications précédentes, dans lequel
le dispositif d'interface opérateur (3) comprend une interface d'entrée opérateur (4) configurée pour recevoir une entrée opérateur par l'opérateur (OP) dans le mode téléopération, et
l'entrée opérateur reçue indiquant une activité particulière réalisée par l'opérateur (OP) en tant qu'activité pertinente pour générer des données d'aspect de style d'opérateur sur la base de l'activité pertinente.

10. Système selon au moins l'une des revendications précédentes, dans lequel
le dispositif d'interface opérateur (3) est configuré pour analyser une apparence visuelle de l'opérateur (OP) et des caractéristiques vocales de l'opérateur (OP).

11. Procédé de fonctionnement d'un système (1) comprenant un dispositif autonome (2) et un dispositif d'interface opérateur (3) connectés via un réseau de communication (N), dans lequel
le dispositif autonome (2) fonctionne dans un mode fonctionnement autonome commandé par un programme de commande autonome (32) ou dans un mode téléopération au moins partiellement commandé à distance, et dans lequel le dispositif d'interface opérateur (3) permet à un opérateur (OP) de commander au moins partiellement le dispositif autonome (2) dans le mode téléopération,
**caractérisé en ce que**
le procédé comprend les étapes suivantes
l'analyse (S1), par un module d'évaluation de style d'opérateur (5, 21), d'une interaction du dispositif autonome (2) avec l'au moins une personne (P) dans l'environnement du dispositif autonome (2) tout en fonctionnant dans le mode téléopération sous le contrôle de l'opérateur (OP) en déterminant des différences entre une action réalisée par le dispositif autonome (2) dans le mode téléopération et au moins un parmi des actions par défaut prédéterminées, des actions prédites et une base de données (27) stockant des actions typiques,
la génération (S2), par le module d'évaluation de style d'opérateur (5, 21), de données d'aspect de style d'opérateur associées à l'opérateur (OP) et à l'au moins une personne (P) sur la base des différences déterminées, et
l'adaptation (S3), par un module d'imitation de style d'opérateur (18, 33), du programme de commande autonome (32) sur la base des données d'aspect de style d'opérateur générées par le module d'évaluation de style d'opérateur (5, 21) lors du contrôle de l'interaction avec l'au moins une personne (P) dans le mode fonctionnement autonome.

12. Programme informatique ayant des moyens de code de programme pour exécuter les étapes selon la revendication 11, lorsque le programme est exécuté sur au moins un processeur ou un processeur de signal numérique.
